(19) Europäisches Patentamt
European Patent Office
Office européen des brevets

(11) Numéro de publication: **0 335 775**
**A1**

(12) # DEMANDE DE BREVET EUROPEEN

(21) Numéro de dépôt: **89400808.5**

(22) Date de dépôt: **22.03.89**

(51) Int. Cl.[4]: **C 01 B 21/098**
C 08 G 79/02

(30) Priorité: **29.03.88 FR 8804085**

(43) Date de publication de la demande:
**04.10.89 Bulletin 89/40**

(84) Etats contractants désignés:
**AT BE CH DE ES FR GB GR IT LI LU NL SE**

(71) Demandeur: **ATOCHEM**
**4 & 8, Cours Michelet La Défense 10**
**F-92800 Puteaux (FR)**

(72) Inventeur: **Bordere, Serge**
**Villa Caplanne 9, Rue Caplanne**
**F-64140 Billere (FR)**

**Chambrette, Jean-Paul**
**9, Rue Caplanne**
**F-64140 Billere (FR)**

**Pagniez, Guy**
**2, Bois de l'Eglise**
**F-64230 Poey de Lescar (FR)**

**Potin, Philippe**
**9, Rue des Pâquerettes**
**F-64140 Billere (FR)**

(74) Mandataire: **Rochet, Michel et al**
**ATOCHEM Département Propriété Industrielle La Défense 10 Cédex 42**
**F-92091 Paris La Défense (FR)**

(54) **Procédé de préparation de compositions de polydichlorophosphazènes à taux contrôlé d'oligomères cycliques et les compositions résultant de la mise en oeuvre de ce procédé.**

(57) L'invention a pour objet un procédé de préparation de compositions de polydichlorophosphazènes renfermant une teneur contrôlée d'oligomères cycliques.

Le contrôle de cette teneur est obtenu par action sur la concentration du monomère ($P_2$ NO $Cl_5$ ou $P_2$ NS $Cl_5$) dans la solution dudit monomère soumis à polycondensation.

L'invention concerne également des compositions renfermant ledit taux contrôlé d'oligomères cycliques.

EP 0 335 775 A1

**Description**

## PROCEDE DE PREPARATION DE COMPOSITIONS DE POLYDICHLOROPHOSPHAZENES A TAUX CONTROLE D'OLIGOMERES CYCLIQUES ET LES COMPOSITIONS RESULTANT DE LA MISE EN OEUVRE DE CE PROCEDE

La présente invention a pour objet un procédé de préparation de polydichlorophosphazènes à taux contrôlé d'oligomères cycliques. Elle concerne également des compositions de polydichlorophosphazènes refermant ledit taux contrôlé d'oligomères cycliques. Ella a encore pour objet les compositions de polychlorophosphazènes résultant de la réaction de substitution des compositions polydichlorophosphazènes précitées.

La préparation de polyphosphazènes de formule générale

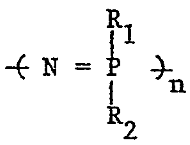

I

dans laquelle les symboles $R_1$ et $R_2$, qui peuvent être identiques ou différents sur le même motif ou d'un motif à l'autre, peuvent représenter un groupement tel que : alcoxy, aryloxy, alkyle, aryle, sulfure, amine, s'effectue habituellement en deux étapes, à savoir d'une part la préparation d'un polydichlorophosphazènes de formule $-(N = P\ Cl_2)_n-$ (II)
puis, d'autre part, par substitution des atomes de chlore du polymère de formule II au moyen des radicaux représentés par $R_1$ et $R_2$, l'obtention des polyphosphazènes de formule I.

Le polydichlorophosphazène de formule II peut, d'une manière générale, être obtenue selon deux techniques, l'une partant d'hexachlorotriphosphazène cyclique de formule

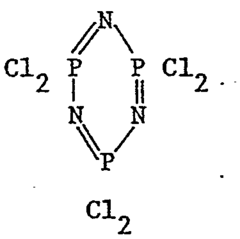

(procédé décrit par H. R. Allcock, par exemple dans le brevet américain 3.370.020), l'autre mettant en jeu le dichlorophosphoryltrichlorophosphazène de formule

$Cl_2\overset{O}{\overset{\|}{P}} - N = P\ Cl_3$

ou le dichlorophosphoryltrichlorophosphazène de formule

$Cl_2\overset{S}{\overset{\|}{P}} - N = P\ Cl_3$

et décrite par exemple par R. de Jaeger dans les brevets français 79.24307, 83.11264 ou la demande française publiée sous le numéro 2.571.710. Lorsqu'on utilise ce dernier procédé, la polycondensation s'accompagne d'un dégagement de $PO\ Cl_3$ ou $PS\ Cl_3$.

Dans le but d'obtenir des polyphosphazènes présentant des propriétés élastomériques, il a été recommandé (brevets US 3.943.088, 4.107.108, 4.124.557, 4.152.314) d'associer aux polydichlorophosphazènes linéaires de formule II des oligomères, linéaires ou cycliques, de phosphazènes, lesdits oligomères jouant un rôle de plastifiant et étant compatibles avec les polymères de formules I et II.

Ces oligomères linéaires ou cycliques peuvent être préparés séparément par substitution de tri- ou tétraphosphazènes chlorés cycliques, au moyen des mêmes substituants que ceux cités pour le polymère lui-même. Les oligomères substitués peuvent ensuite être mélangés au polymère de formule I lors de sa formulation.

Lorsqu'on prépare le polydichlorophosphazène par la voie du trimère cyclique, il est nécessaire, pour éviter la réticulation du polymérisat, d'arrêter la polymérisation à un taux de conversion de l'ordre de 50 %, ce qui entraîne, même après élimination du trimère cyclique, la présence d'une quantité importante d'oligomères. Après substitution, ces oligomères, dont la masse est comprise en général entre 700 et 500.000, sont extraits par dissolution sélective, isolés et peuvent être re-mélangés au taux désiré avec le polymère.

L'invention concerne un procédé de préparation directe de compositions de polydichlorophosphazènes à taux contrôlé d'oligomères cycliques, par la voie mettant en jeu un dichlorophosphoryltrichlorophosphazène et/ou un dichlorothiophosphoryltrichlorophosphazène, ces deux produits étant représentés ci-après par la formule abrégée $P_2\ NX\ Cl_5$, X désignant O ou S. Elle concerne également ces compositions ainsi que les compositions de polyphosphazènes substitués renfermant un taux contrôlé d'oligomères.

Ce procédé est caractérisé en ce que le taux d'oligomères cycliques est contrôlé par action sur la concentration de $P_2$ NX $Cl_5$ dans la solution soumise à polycondensation.

Les compositions résultant de la mise en oeuvre de ce procédé, qui constituent en elles-mêmes un autre objet de l'invention sont caractérisées en ce qu'elles comprennent un polydichlorophosphazène et un ou plusieurs oligomères cycliques de formule

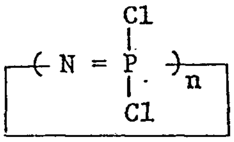 . III

dans laquelle n est compris entre 3 et 5 (inclus) à un taux sensiblement inversement proportionnel à la concentration du $P_2$ NX $Cl_5$ dans la solution soumise à la polycondensation.

L'invention concerne tout particulièrement les compositions renfermant un ou des oligomères de formule III dans laquelle n = 3,4 ou 5 mais elle n'exclut évidemment pas les compositions dans lesquelles on peut trouver des oligomères supérieurs c'est-à-dire dans la formule desquels n est supérieur à 5 et peut par exemple aller de 6 à 10.

D'une manière générale, les compositions résultant directement de cette polycondensation en solution sont sensiblement exemptes de monomère n'ayant pas réagi. Parmi ces compositions, l'invention concerne tout spécialement les compositions comprenant entre environ 1,5 et environ 50 % d'oligomères par rapport à l'ensemble polydichlorophosphazène + oligomère (mesure effectuée selon la méthode décrite dans l'exemple 1), les oligomères comprenant d'environ 2 à environ 10 % d'oligomère de formule III avec n = 3, d'environ 15 à environ 35 % d'oligomère avec n = 4 et d'environ 55 à environ 75 % d'oligomère avec n = 5.

Il doit être entendu que ces observations concernent les compositions résultant directement de la polycondensation en milieu solvant, mais qu'il est toujours possible de modifier ultérieurement la teneur de composition en oligomère.

Dans la mise en oeuvre du procédé conforme à l'invention, on constate que le taux d'oligomère cesse d'évoluer à partir du moment où le dégagement de P X $Cl_3$ cesse d'être mesurable, ce qui survient en général au bout d'environ 10 % de la durée totale de polycondensation. Le taux d'oligomère reste ensuite sensiblement constant jusqu'à la fin de la polycondensation. On constate que dans le procédé conforme à l'invention, le choix du rapport monomère/solvant introduit au départ permet, avec une bonne précision, de régler le taux d'oligomères cycliques présent dans la composition de polydichlorophosphazène résultant de la mise en oeuvre de ce procédé. Bien évidemment on ne sortirait pas du cadre de l'invention en ajoutant en une ou plusieurs fois une nouvelle quantité de solvant au cours de la polycondensation et notamment après le départ de $PXCl_3$, comme indiqué par exemple dans le brevet français 2 571710. Après l'opération de substitution du polydichlorophosphazène, connue en elle-même et qui, de ce fait, ne constitue pas un object de l'invention, la composition contient un taux préréglé d'oligomère cyclique c'est-à-dire de plastifiant, sans qu'il y ait lieu de se livrer à une opération complémentaire.

A titre purement indicatif, le solvant utilisable dans le procédé conforme à l'invention et qui peut subsister dans les compositions résultant de la mise en oeuvre de ce procédé peut être choisi notamment parmi les hydrocarbures à caractère aromatique et les dérivés chlorés de tels hydrocarbures. Parmi de tels solvants, qui peuvent être utilisés seuls ou en mélange, on citera notamment le benzène, le naphtalène, le diphényle, le chlorobenzène, les dichlorobenzènes, les trichlorobenzènes, le tétrachlorobenzène, le pentachlorobenzène, l'hexachlorobenzène, les chloronaphalènes, les chlorodiphényles et notamment les trichlorodiphényles.

D'une manière générale, le température de polycondensation de $P_2NX$ $Cl_5$ peut être comprise entre 200 et 350° C et de préférence entre 210 et 300° C.

Le procédé conforme à l'invention mis en oeuvre à ces températures permet d'une manière générale de préparer des compositions contenant, au terme de la mise en oeuvre de ce procédé, des teneurs en oligomères (exprimées comme indiqué ci-après dans l'exemple 1) pouvant atteindre 50 % pour une concentration en $P_2$ NX $Cl_5$ inférieure à 10 % dans la solution et être aussi réduites que 1,5 % pour une concentration voisine de 100 %. D'une manière générale, cette concentration peut varier entre 0,1 % et sensiblement 100 %.

A titre purement indicatif, en pour une température de polycondensation de 270° C, on peut proposer la relation suivante entre le taux d'oligomères cycliques (ensemble des produits de formule III dans laquelle n = 3, n = 4 et n = 5) et la concentration initiale en $P_2$ NO $Cl_5$ :

$$\log [\text{ oligomères } \% ] = -1{,}43 \cdot 10^{-2} [P_2 NO Cl_5 \%] + 1{,}726$$

(Coefficient de correlation : 0,996).

La figure jointe illustre cette relation.

Les compositions de polydichlorophosphazènes obtenues conformément au procédé décrit ci-avant peuvent être substituées selon des techniques connues, par exemple par réaction avec des phénates ou des alcoolates. Ces compositions de polyorganophosphazènes constituent également un objet de l'invention.

Les exemples suivants illustrent l'invention.

EXEMPLE 1

L'appareillage de polycondensation comprend un réacteur agité, chauffé par circulation d'huile, surmonté d'un condenseur à reflux, thermostaté à 140° C, qui débouche sur un système de réception de $PO\ Cl_3$, ledit système comprenant un condenseur descendant et une recette graduée.

Le réacteur est chargé avec 894 g (3,32 moles) de $P_2\ NO\ Cl_5$ et est chauffé à 280° C. Après 4 heures de réaction, le $PO\ Cl_3$ cesse pratiquement de couler. On effectue une prise d'échantillon à ce stade et rajoute 826,4 g de trichlorodiphényle. La polycondensation est poursuivie pendant 47 heures en effectuant des prises d'échantillon aux temps (t). On effectue sur chacun de ces échantillons un dosage par RMN $^{-31}$ P des oligomères cycliques et du polydichlorophosphazène.

On indique ci-après la répartition entre trimère, tétramère et pentamère ainsi que la répartition de ces oligomères par rapport au polymère. Les valeurs sont exprimées en % de phosphore, $n_3$ %, $n_4$ % et $n_5$ % étant données par le rapport :

$$\frac{\text{Intégration du pic correspondant à } n_3 \text{ ou } n_4 \text{ ou } n_5}{\text{somme } \Sigma_i}$$

somme $\Sigma_i$ étant la somme des intégrations des pics correspondants à à $n_3$, $n_4$ et $n_5$

$$\Sigma_{ni}\ \% = \frac{\text{somme } \Sigma_{ni} \text{ des intégrations des pic correspondant à } n_3,\ n_4 \text{ et } n_5}{\Sigma_{ni} + \text{intégration du pic correspondant au polymère}}$$

| Echantillon | (1) | (2) | (3) | (4) | (5) |
|---|---|---|---|---|---|
| t (heures) | 4 | 25 | 29 | 33 | 47 |
| $n_3$ % | 7,2 | 7,4 | 7,3 | 6,5 | 5,3 |
| $n_4$ % | 25,8 | 24,3 | 26,8 | 26,1 | 25,6 |
| $n_5$ % | 67,1 | 68,3 | 65,9 | 67,4 | 69 |
| $\Sigma_{ni}$ % | 2,45 | 3,05 | 2,31 | 2,36 | 2,51 |

La lecture de ce tableau montre à la fois qu'une concentration de 100 % pendant la 1° phase de polycondensation (jusqu'à cessation du départ de $POCl_3$) conduit à un certain taux d'oligomères cycliques ($\Sigma_{ni}$ % d'environ 2,5 ± 0,5), taux qui reste constant au cours de la poursuite de la polycondensation et l'accroissement de la masse moléculaire sans réticulation, rendue possible grâce à l'addition de solvant.

EXEMPLE 2

On renouvelle l'essai de l'exemple 1 en remplaçant les 894 g de $P_2\ NO\ Cl_5$ par 100 g du même monomère et en effectuant la polycondensation à plusieurs températures et plusieurs concentrations. Les analyses sont également faites par RMN $^{-31}$ P.

Le tableau qui suit rassemble les résultats.

Dans ce tableau, les valeurs indiquées dans la colonne t(h) correspondent à une durée sensiblement double de celle requise par l'élimination de $POCl_3$.

| Exemples | Température (°C) | $P_2$ $NOCl_5$% (1) | t(h) | $n_3$ % | $n_4$ % | $n_5$ % | $\Sigma_{ni}$ % |
|---|---|---|---|---|---|---|---|
| 2 | 210 | 100 | 37,6 | 4 | 23 | 74 | 1,6 |
| 3 | 210 | 50 | 100 | 3,4 | 23,7 | 72,9 | 5,02 |
| 4 | 210 | 10 | 300 | 4,70 | 30,5 | 64,8 | 42,5 |
| 5 | 240 | 50 | 13,8 | 4,5 | 25,5 | 70 | 8,11 |
| 6 | 240 | 50 | 8,1 | 5,2 | 27,8 | 67 | 9,17 |
| 7 | 240 | 50 | 15,75 | 4,8 | 24,9 | 70,1 | 8,67 |
| 8 | 270 | 100 | 2,3 | 7,4 | 28,1 | 64,5 | 2,03 |
| 9 | 270 | 74 | 2,3 | 6,9 | 24,6 | 68,5 | 4,64 |
| 10 | 270 | 50 | 2,5 | 5,3 | 28,5 | 66,2 | 10,40 |
| 11 | 270 | 30 | 3 | 6,7 | 27,6 | 65,7 | 17,71 |
| 12 | 270 | 10 | 11,25 | 7 | 32,6 | 60,4 | 41,64 |

(1) La concentration est exprimée en poids de monomère sur le poids de solution.

Elle est mesurée sur la solution initiale soumise à polycondensation.

Ce tableau appelle les commentaires suivants :

. La comparaison des exemples 2, 3 et 4 d'une part, 8, 9, 10, 11, et 12 d'autre part, montre qu'à une température donnée la teneur en oligomères ($\Sigma_{ni}$ %) est d'autant plus élevée que la concentration en $P_2$ NO $Cl_5$ est faible.

. Le taux d'oligomères tend à s'accroître avec la température, cet effet étant plus important à basse température (à même concentration en monomère).

. La comparison des exemples 5, 6 et 7, réalisée en renouvelant chaque fois l'essai dans son intégralité, montre la reproductibilité du procédé.

**Revendications**

1. Procédé de préparation directe de compositions de polydichlorophosphazènes à taux contrôlé d'oligomères cycliques, à partir de dichlorophosphoryltrichlorophosphazène et/ou dichlorothiophosphoryltrichlorophosphazène, représentés par la formule $P_2$ NX $Cl_5$ dans laquelle X représente respectivement O ou S, ledit procédé étant caractérisé en ce qu'il consiste à contrôler le taux d'oligomères cycliques dans lesdites compositions par action sur la concentration de $P_2$ NX $Cl_5$ dans la solution soumise à polycondensation.

2. Procédé selon la revendication 1, caractérisé en ce que les oligomères cycliques comprennent les produits répondant à la formule

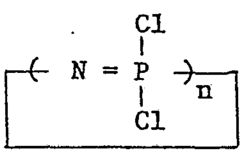

dans laquelle n est compris entre 3 et 5 (inclus).

3. Procédé selon l'une quelconque des revendications 1 ou 2, caractérisé en ce que la concentration en $P_2$ NO $Cl_5$ varie entre 0,1% et 100 %.

4. Procédé selon l'une quelconque des revendications 1 à 3, caractérisé en ce que la température de la polycondensation est comprise entre 200 et 350° C.

5. Procédé selon l'une quelconque des revendications 1 à 4, caractérisé en ce que la solvant est choisi dans le groupe constitué par les hydrocarbures à caractère aromatique et leurs dérivés chlorés.

6. Des compositions comprenant un polydichlorophosphazène et un taux contrôlé d'oligomères cycliques de formule

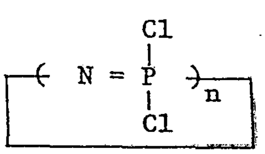

dans laquelle n est compris entre 3 et 5 (inclus).

7. Des compositions selon la revendication 6, caractérisées en ce que le taux d'oligomères cycliques est compris entre environ 1,5 % et environ 50 %.

8. Des compositions selon l'une quelconque des revendications 6 ou 7 et telles qu'obtenues par mise en oeuvre du procédé selon l'une quelconque des revendications 1 à 6.

9. Des compositions selon la revendication 8, préparées par polycondensation à 270° C, et dans lesquelles le taux d'oligomères cycliques est sensiblement régi par la relation.

$\log [\text{oligomères } \%] = -1{,}43 . 10^{-2} [P_2NOCl_5 \%] + 1{,}726$

10. Des compositions selon l'une quelconque des revendications 6 à 9, caractérisées en ce qu'elles comprennent d'environ 1,5 à environ 50 % d'oligomères de formule III dans laquelle n = 3, 4 et 5 par rapport à l'ensemble polydichlorophosphazène + oligomères, ces oligomères étant partagés entre environ 2 et environ 10 % d'oligomères avec n = 3, entre environ 15 et environ 35 % d'oligomères avec n = 4 et entre environ 55 et environ 75 % d'oligomère avec n = 5.

11. Des compositions selon l'une quelconque des revendications 6 à 10, caractérisées en ce qu'elles sont soumises à une réaction de substitution des atomes de chlore du polydichlorophosphazène et des oligomères par des radicaux alcoxy, aryloxy, alkyle, aryle, sulfure ou amine.

PLANCHE UNIQUE

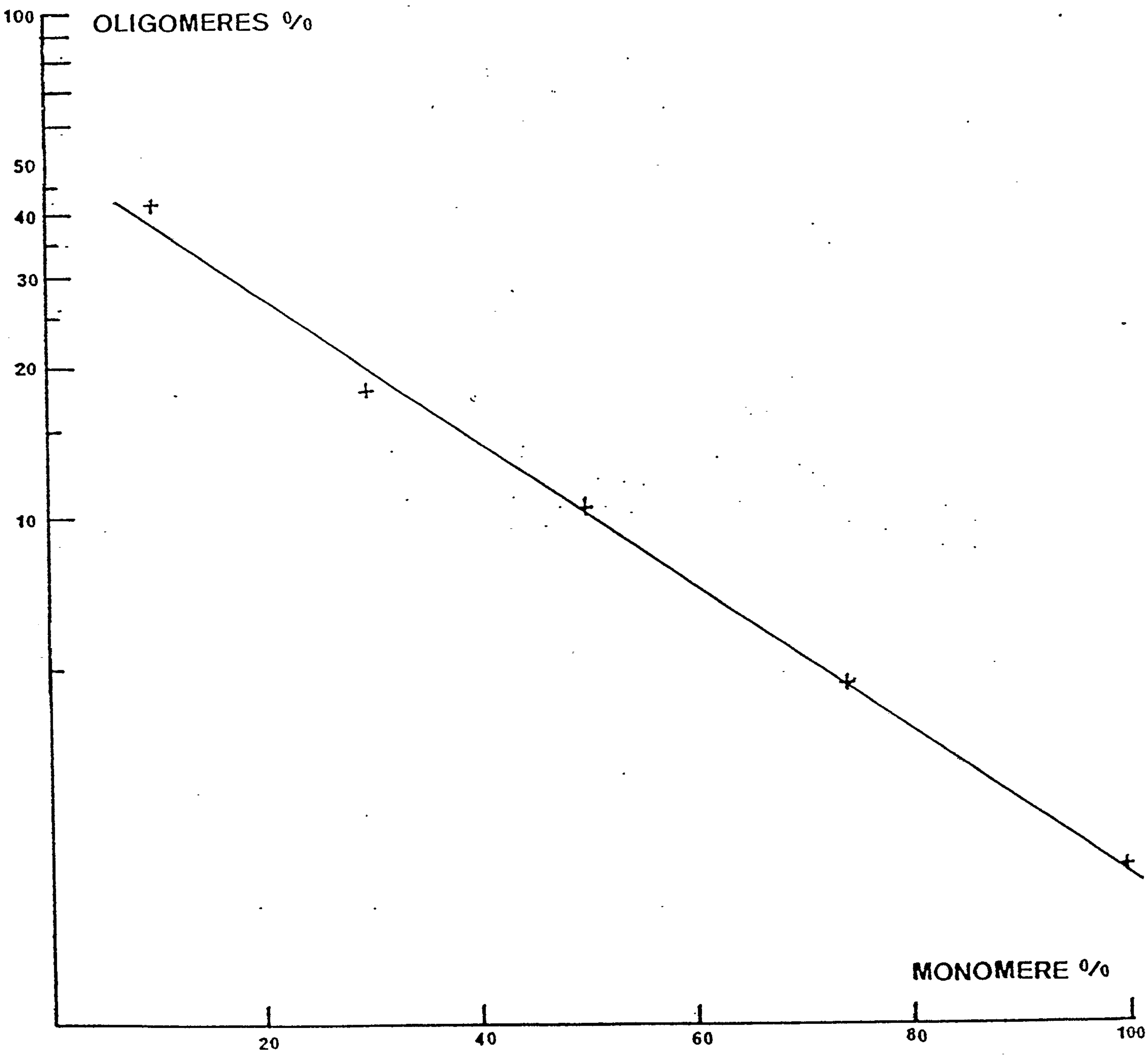

Office européen des brevets

# RAPPORT DE RECHERCHE EUROPEENNE

Numero de la demande

EP 89 40 0808

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 178 997 (ELF AQUITAINE)<br>* Revendications 1,7,9; page 5, lignes 25-35 * & FR-A-2 571 710 (Cat. A,D) | 1-3,6-10 | C 01 B 21/098<br>C 08 G 79/02 |
| A | * Revendications 4,5; page 4, ligne 35 - page 5, ligne 4 * | 4 | |
| A | EP-A-0 178 998<br>* Revendication 3; page 4, lignes 24-34 * | 5 | |
| A | EP-A-0 132 188 (ELF AQUITAINE) | | |
| A | EP-A-0 026 685 (INSTITUT MONDIAL DU PHOSPHATE) | | |

| DOMAINES TECHNIQUES RECHERCHES (Int. Cl.4) |
|---|
| C 01 B 21/00 |

Le présent rapport a été établi pour toutes les revendications

| Lieu de la recherche | Date d'achèvement de la recherche | Examinateur |
|---|---|---|
| LA HAYE | 16-06-1989 | ZALM W.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)